Europäisches Patentamt

(19) European Patent Office

Office européen des brevets

(11) Publication number : **0 047 758
B1**

(12) # EUROPEAN PATENT SPECIFICATION

(45) Date of publication of patent specification :
21.03.84

(51) Int. Cl.³ : **B 05 B   1/34, E 02 B  15/04**

(21) Application number : 81900643.8

(22) Date of filing : 19.03.81

(86) International application number :
PCT/GB 81/00050

(87) International publication number :
WO WO/81026 (01.10.81 Gazettee 81/23)

(54) **METHOD OF AND APPARATUS FOR COMBATTING WATER-BORNE POLLUTION.**

(30) Priority : 20.03.80 GB 8009486

(43) Date of publication of application :
24.03.82 Bulletin 82/12

(45) Publication of the grant of the patent :
21.03.84 Bulletin 84/12

(84) Designated contracting states :
DE FR GB NL SE

(56) References cited :
DE-A- 1 634 080
FR-A- 2 383 271
GB-A- 1 358 042
US-A- 3 532 622
US-A- 3 934 823
US-A- 3 948 444

(73) Proprietor : DELAVAN LIMITED
Gorsey Lane
Widnes, Cheshire WA8 ORJ (GB)

(72) Inventor : PERCIVAL, David Robert
9 Denham Avenue Great Sankey
Warrington Cheshire, WA5 1LJ (GB)
Inventor : SHELDON, William
96 Whitbarrow Road
Lymm, Cheshire (GB)

(74) Representative : Thiemann, Peter Albert William et al
LLOYD WISE, TREGEAR & CO. Norman House
105-109 Strand
London WC2R 0AE (GB)

Method of and apparatus for combatting water-borne pollution

This invention relates to a method of and apparatus for combatting water-borne pollution and is particularly concerned with controlling pollution at sea caused by oil spillages or accidents involving oil tankers.

Since the accident involving the oil tanker « Torrey Canyon » in 1967, there has been increased activity in devising means for combatting oil pollution at sea. At present, a preferred method of dealing with large areas of pollution, such as oil slicks, is to spray the polluted region with and oil-dispersant composition from at least one nozzle which is translated across the body of water on which the oil pollution lies and to agitate the sprayed region. Such a method is described in the Specification of British Patent GB-A-1 358 042. In order to carry out the method, a tug or like vessel equipped with spraying equipment traverses the slick and sprays the slick with a dispersant. The equipment comprises a boom, having spray nozzles mounted thereon, extending on each side of the vessel and arranged to spray the slick with a mixture of dispersant and sea water. The vessel trails floating devices, which may be in the form of breaker boards, which are similar in construction to five-barred gates, for the purpose of agitating the area of the slick on which the dispersant has been sprayed and affecting good mixing of the dispersant. It is necessary to mix the dispersant with sea water, usually in the ratio of 10 : 90 % by weight in order to effect good spread of the dispersant and to give the spray sufficient « weight » to minimise drift. Using conventional nozzles directed to spray downwards, the mean droplet size is in the region of 150 $\mu$ and the small size of the droplets means that the spray is susceptible to drift. In order to reduce the drift, the nozzles have to be mounted fairly close to the water and this restricts the conditions under which spraying can be effected. In practice it is found that the vessel cannot proceed at more than 3 or 4 knots and that spraying cannot be carried out in winds stronger than about 10 knots. Even in relatively favourable conditions, losses due to drift and evaporation can be high. Furthermore, the presence of the floating devices trailed by the vessel prevents the vessel from going astern and from manoeuvring in confined spaces. The floating devices also severely increase the drag on the vessel.

It is an object of the invention to provide a method of and apparatus for combatting water-borne pollution which is more flexible and efficient than the method and apparatus conventionally used.

In accordance with one aspect of the present invention there is provided a method of combatting waterborne oil pollution, comprising spraying the polluted region with an oil-dispersant composition from at least one nozzle which is translated across the body of water on which the oil pollution lies, and agitating the sprayed region, (see GB-A-1 358 042) characterised in that the oil-dispersant composition is sprayed from at least one double swirl chamber nozzle having a primary swirl chamber into which the composition is introduced tangentially and from which the composition exits through a primary orifice as a primary spray into a secondary swirl chamber which the composition leaves through an outlet orifice in the form of a secondary spray having a narrower droplet size range than said primary spray, said chambers and orifices being coaxial, and the nozzle(s) being directed rearwardly relative to the direction of translation, and in that the sprayed region is subsequently agitated by being sprayed with water drawn from said body of water.

Another aspect of the present invention provides apparatus for combatting water-borne oil pollution, comprising a vehicle for moving across the surface of the body of water on which the oil pollution lies, a boom member mounting at least one nozzle through which an oil-dispersant composition can be sprayed on to the polluted region as the vehicle is translated thereover, and means for agitating the sprayed region (see GB-A-1 358 042), characterised in that the or each nozzle is a double swirl chamber nozzle, having a primary swirl chamber, a tangential inlet to said primary swirl chamber, a primary orifice connecting said primary swirl chamber with a secondary swirl chamber and an outlet orifice to said secondary swirl chamber, said chambers and orifices being coaxial, and said nozzle(s) being directed rearwardly relative to the intended direction of translation, there being pump means for delivering an oil-dispersant composition under pressure to said nozzle(s), and in that said agitating means comprises a further boom member disposed between said first mentioned boom member and the stern of the vehicle and mounting a plurality of conventional spray nozzles, there being means for pumping water under pressure to said conventional spray nozzles thereby to agitate the polluted region sprayed by said double swirl chamber nozzles.

In order to carry out the present method, the nozzles may be mounted on a water-borne vehicle, such as a tug or lighter which traverses the polluted region or may be mounted on an air-borne vehicle such as an air-cushion vehicle, e. g., hovercraft.

The nozzles are preferably directed to spray rearwardly at an angle from the horizontal to 45° below the horizontal.

It is convenient to form the oil-dispersant composition by diluting a dispersant with water drawn from the body of water on the surface of which the pollution lies. In order to effect adequate mixing of the sprayed oil-dispersant composition and the oil pollution, it is necessary only to spray the polluted and sprayed region with water drawn from the body of water on which the pollution lies, rather than to use floating devices as was previously necessary.

The double swirl chamber nozzles used in the present method and apparatus are described in the specification of U.S. Patent US-A-3 948 444 and have a primary swirl chamber into which the liquid to be sprayed is introduced tangentially to swirl therein. The primary swirl chamber terminates in a primary orifice through which the liquid exits in the form of a spray with a wide range of droplet sizes as in a conventional spray nozzle. However, the primary orifice leads into a secondary swirl chamber in which the swirling motion of the droplets is slowed down somewhat and in which the fine droplets agglomerate so that the spray leaving the nozzles through a secondary or outlet orifice, which generates the angle of the resulting spray cone and controls the distribution of the spray, has a much narrower droplet size distribution. For best results for the present invention, the mean droplet size is about 10 times that of the mean droplet size of a conventional nozzle, i. e., the mean droplet size is preferably 1,000 to 1,500 $\mu$. Because the droplets are larger than with a conventional nozzle, the spray is less susceptible to drift, and, as whill be shown, by directing the nozzle generally rearwardly relative to the direction of travel of the vessel more certain coverage of the polluted area can be achieved. Furthermore, the nozzles used in the present invention can be mounted higher above the water than with conventional systems and it has been found that with the present apparatus it is possible to spray from one nozzle over a band width of 6 m, whereas the conventional system requires 3 nozzles to cover a band width of 4 m, both systems working at the same pressure.

In order to enable the invention to be more readily understood, reference will now be made to the accompanying drawings, which illustrate diagrammatically and by way of example an embodiment thereof, and in which :

Figure 1 is a section through a double swirl chamber nozzle,

Figure 2 is a schematic view of a spraying system mounted on a tug,

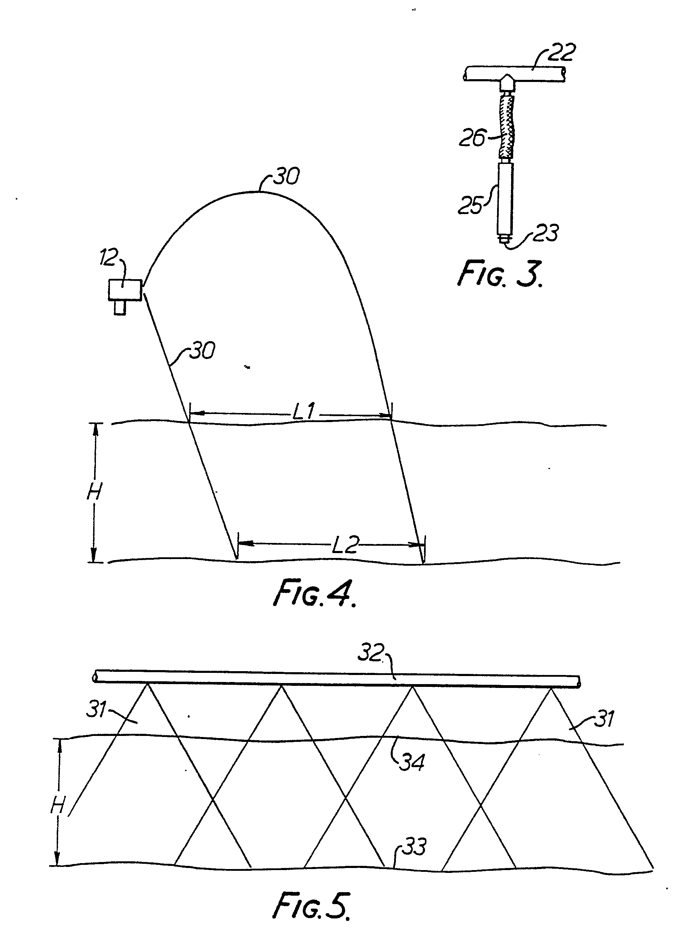

Figure 3 shows the mounting of a nozzle on a boom,

Figure 4 shows the coverage of the polluted area obtained by the present invention, and

Figure 5 in contrast to Figure 4, shows the coverage of the polluted area obtained with conventional nozzles.

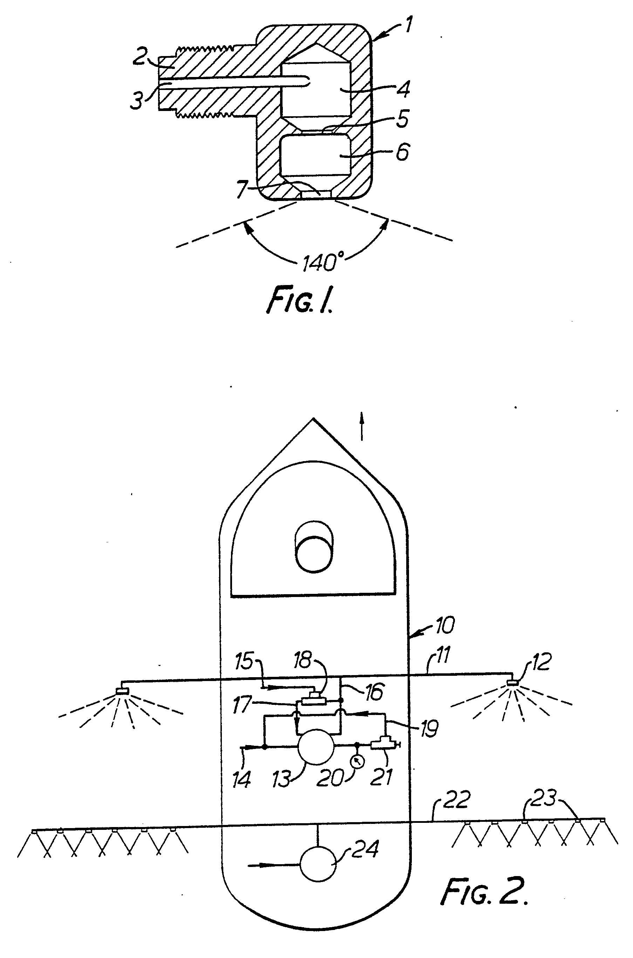

Referring now to Figure 1 of the drawings, there is shown a double swirl chamber nozzle 1 having an inlet stem 2 in which is a bore 3 leading tangentially into a primary swirl chamber 4. The primary swirl chamber is closed at one end and at the other is constricted by a primary orifice 5 leading into one end of a secondary swirl chamber 6 at the other end of which is a secondary or outlet orifice for generating the angle of the issuing spray cone controlling the distribution of liquid being sprayed, the swirl chambers and orifices being coaxial.

In the operation of this nozzle, liquid under pressure enters the primary swirl chamber through the bore 3 and as the bore leads tangentially into the chamber a swirl is imparted to the liquid so that it issues in atomised form through the primary orifice 5. So far the operation is similar to that of a conventional spray nozzle and the spray issuing through the orifice 5 has a wide droplet size range and a mean droplet size of the order of 150 $\mu$. The spray passes into the secondary swirl chamber where the velocity of swirl is reduced and fine droplets agglomerate so that the resulting spray issuing through the outlet orifice 7 has a much narrower droplet size range and is composed of much larger droplets having, for the purposes of the present invention, a preferred mean droplet size of the order of 1 000 to 1 500 $\mu$. Preferably, as shown, the nozzle is arranged to discharge a spray with a cone angle of 140°.

It will be appreciated that this nozzle, which is similar to those described in United States Patent Specifications Nos. 3 934 823 and 3 948 444, may be designed to produce sprays with different mean droplet sizes and cone angles and using different rates of throughput of liquid. The nozzle may be made of nylon, stainless steel or other suitable material.

Figure 2 shows spraying apparatus mounted on a tug 10. The apparatus comprises a boom 11 at each end of which is a double swirl chamber nozzle 12 of the type shown in Figure 1. A pump 13 is arranged to pump a mixture of sea water and oil dispersant through the boom to the nozzles 12. The pump is arranged to draw in sea water through a sea water inlet 14 and dispersant through a dispersant inlet 15 and, after the dispersant and sea water have been mixed in the pump, to deliver the mixture to the boom 11 through an outlet pipe 16. A partial stream of the liquid flowing in the pipe 16 is branched off through a branch pipe 17 in which is disposed a Venturi 18 through which the dispersant is drawn into the pipe 17 and fed into the pump 13. By this means it is possible to use one pump to feed both dispersant and sea water rather than two pumps as have been used in previously proposed methods. A further partial stream of liquid delivered by the pump is circulated through a pipe 19 to the sea water inlet 14, the pipe 19 containing a pressure gauge 20 and a flow control device 21 for controlling the delivery pressure of the pump.

Further to the stern of the tug than the boom 11 and pump system is a further boom 22 fitted with a plurality of conventional spray nozzles 23 to which sea water is fed by a further pump 24. As the nozzles 23 are of the conventional kind they have to be mounted nearer to the surface of the water and in order to prevent the boom 22 and nozzles 23 from being damaged due to wave action each nozzle is mounted at the end of a rigid length of pipe 25 suspended from the boom 22 by a flexible pipe 26.

The tug shown in Figure 2 can traverse an oil slick while spraying it evenly through the nozzles 12 with coarse drops of a mixture comprising a dispersant. The slick and dispersant sprayed threreon are then agitated by spraying them with sea water through the nozzles 23. The use of the nozzles 23 to effect agitation and thorough mixing of the dispersant with the material of the oil slick in place of the conventional breaker boards has the advantages that the tug can go astern or manoeuvre in confined spaces while effecting agitation and that there are no breaker boards to increase the drag on the tug or to become lost.

Figure 4 shows that the double swirl chamber nozzles 12 are preferably mounted on the boom to direct the spray directly to the rear. However, the nozzles may be mounted to direct the spray at any angle between the horizontal and 45° below the horizontal. Due to the effect of gravity on the droplets, the envelope of the spray cone directed rearwardly of the tug is distorted into the shape 30 shown in Figure 4. The height H indicates the variation due to the swell of water, and it will be seen that the length L1 of the area of the slick covered by the spray in a trough is substantially equal to the length L2 of the area covered by the spray on a crest. In each case, the breadth in a direction transverse to the direction of travel of the tug will likewise be substantially the same.

The excellent coverage of the slick shown by Figure 4 is in contrast to previous proposals for spraying oil slicks with conventional nozzles such as is shown in Figure 5. It will be seen from this Figure that, whereas the spray cones 31 of a number of conventional nozzles mounted on a boom 32 overlap when the tug is on a crest (the water line being 33) when the tug is in a trough and the water line is 34, H indicating the variation due to swell, there are regions between the spray cones which are not covered by the spray, resulting in the socalled « tramline effect ». It is to be appreciated that if conventional nozzles were mounted to spray rearwardly in the manner shown in Figure 4 there would be considerable drift of the spray and the spray would be distributed over such a wide area that adequate coverage could not be obtained. With the spray shown in Figure 4, even if there should be drift due to strong winds, the whole envelope will tend to be displaced due to the fact that the droplets constituting the spray are of substantially the same size.

A previously proposed system comprising a boom fitted on a tug and mounting three nozzles on each side of the tug is capable of spraying 60 l/min of 10 : 90 dispersant : sea water mixture to cover a band width of 4 m on each side of the tug. In experiments conducted using the apparatus shown in Figure 2, it has been possible to spray the same amount of spray using one nozzle on each side and covering a band width of 6 m. In fact useful coverage, but over a reduced band width, has been achieved at rates as low as about 1.5 l/min. Furthermore, these experiments indicate that, using the present method and apparatus, the tug can travel at up to 14 to 15 knots and that spraying can take place in winds of up to 45 knots, whereas the previously proposed system can not travel at more than 3 or 4 knots and spraying can not take place in winds stronger than 10 knots.

Because of the efficient coverage of an oil slick at even low rates of application provided by the present method and apparatus, the present method and apparatus provide the possibility of spraying an oil slick with neat dispersant, thereby obviating the need to pump sea water and considerably reducing power requirements.

Although the present spraying apparatus has been described as being mounted on a tug, it is to be appreciated that it may be mounted on any suitable water-borne vessel or air-borne vehicle, such as an air-cushion vehicle or aircraft. The apparatus could also be mounted on an oil rig to countain or combat pollution caused by leakages, blow-outs or the like.

## Claims

1. A method of combatting water-borne oil pollution, comprising spraying the polluted region with an oil dispersant composition from at least one nozzle which is translated across the body of water on which the oil pollution lies, and agitating the sprayed region, characterised in that the oil dispersant composition is sprayed from at least one double swirl chamber nozzle having a primary swirl chamber into which the composition is introduced tangentially and from which the composition exits through a primary orifice as a primary spray into a secondary swirl chamber which the composition leaves through an outlet orifice in the form of a secondary spray having a narrower droplet size range than said primary spray, said chambers and orifices being coaxial, and the nozzle(s) being directed rearwardly relative to the direction of translation, and in that the sprayed region is subsequently, agitated by being sprayed with water drawn from said body of water.

2. A method as claimed in Claim 1, wherein the nozzle(s) is (are) directed to spray at an angle from the horizontal to 45° below the horizontal.

3. A method as claimed in Claim 1 or 2, wherein the sprayed oil-dispersant composition has a droplet size of 1,000 to 1,500 μ.

4. A method as claimed in any one of Claims 1 to 3, wherein the or each nozzle is arranged to discharge a spray with a cone angle of 140°.

5. A method as claimed in any one of Claim 1 to 4, wherein the oil-dispersant composition comprises a dispersant and water drawn from the body of water on the surface of which the oil pollution lies.

6. Apparatus for combatting water-borne oil pollution, comprising a vehicle for moving across the surface of the body of water on which the oil pollution lies, a boom member mounting at least one nozzle through which an oil-dispersant composition can be sprayed on to the polluted region as the vehicle is translated thereover, and means for agitating the sprayed region, characterised in that the or each nozzle is a double swirl chamber nozzle, having a primary swirl chamber, a tangential inlet to said primary swirl chamber, a primary orifice connecting said primary swirl chamber with a secondary swirl chamber and an outlet orifice to said secondary swirl chamber, said chamber and orifices being coaxial, and said nozzle(s) being directed rearwardly relative to the intended direction of translation, there being pump means for delivering an oil-dispersant composition under pressure to said nozzle(s), and in that said agitating means comprises a further boom member disposed between said first mentioned boom member and the stern of the vehicle and mounting a plurality of conventional spray nozzles, there being means for pumping water under pressure to said conventional spray nozzles thereby to agitate the polluted region sprayed by said double swirl chamber nozzles.

7. Apparatus as claimed in Claim 6, wherein the nozzle(s) is (are) directed to spray at an angle from the horizontal to 45° below the horizontal.

8. Apparatus as claimed in Claims 6 or 7, wherein the vehicle is water-borne.

### Ansprüche

1. Verfahren zum Bekämpfen von wassergetragenen Ölverschmutzungen durch Besprühen des verschmutzten Bereiches mit einer Öldispergiermittel-Zusammensetzung, die über mindestens eine über den verschmutzten Bereich geführte Düse ausgebracht wird, der nach dem Besprühen umgewälzt wird, dadurch gekennzeichnet, daß die Öldispergiermittel-Zusammensetzung über mindestens eine Doppelwirbelkammer-Düse versprüht wird, in deren erster Wirbelkammer das Öldispergiermittel tangential eingebracht wird und aus der es über eine erste Öffnung als Primärsprühstrahl ausgebracht und in eine zweite Wirbelkammer eingebracht wird, aus der es über eine Auslaßöffnung in Form eines Sekundärsprühstrahls mit einer kleineren Tröpfchengröße als im Primärsprühstrahl ausgebracht wird, wobei die Wirbelkammern und Auslässe koaxial liegen und die Düse bzw. Düsen in bezug auf ihre Bewegungsrichtung rückwärts gerichtet ist bzw. sind, und daß nachfolgend der besprühte Bereich durch Besprühen mit aus diesem Bereich stammendem Wasser umgewälzt wird.

2. Verfahren nach Anspruch 1, dadurch gekennzeichnet, daß die Düse bzw. Düsen für das Sprühen unter einem Winkel von 45° unterhalb der Horizontalen ausgerichtet wird bzw. werden.

3. Verfahren nach den Ansprüchen 1 oder 2, dadurch gekennzeichnet, daß die zu versprühende Öldispergiermittel-Zusammensetzung eine Tröpfchengröße von 1,000 bis 1,500 μ aufweist.

4. Verfahren nach einem der Ansprüche 1 bis 3, dadurch gekennzeichnet, daß über jede Düse ein Sprühstrahl mit einem Konuswinkel von 140° ausgebracht wird.

5. Verfahren nach einem der Ansprüche 1 bis 4, dadurch gekennzeichnet, daß die Öldispergiermittel-Zusammensetzung ein Dispergiermittel und Wasser aus dem ölverschmutzten Bereich umfasst.

6. Einrichtung zur Durchführung des Verfahrens zum Bekämpfen von wassergetragenen Ölverschmutzungen nach den Ansprüchen 1 bis 5, mit einem Fahrzeug für das Überqueren der Oberfläche des ölverschmutzten Wasserbereiches, mit einem Ausleger mit mindestens einer Düse, über die die Öldispergiermittel-Zusammensetzung während dieser Bewegung auf den verschmutzten Bereich versprühbar ist, dadurch gekennzeichnet, daß jede Düse eine Doppelwirbelkammer-Düse ist mit einer ersten, einen tangentialen Einlass aufweisenden Wirbelkammer, die zwecks Verbindung mit einer zweiten Wirbelkammer eine erste Öffnung besitzt, daß die Wirbelkammern und die erste Öffnung koaxial zueinander angeordnet sind, daß die Düse bzw. Düsen in bezug auf die beabsichtigte Bewegungsrichtung rückwärts gerichtet angeordnet ist bzw. sind, wobei Pumpeinrichtungen zwecks Zuführung der Öldispergiermittel-Zusammensetzung unter Druck zu der bzw. den Düsen vorgesehen sind, und daß an einem weiteren Ausleger zwischen dem ersten Ausleger und dem Heck des Fahrzeugs Umwälzmittel in Form einer Mehrzahl konventioneller Sprühdüsen angeordnet sind, wobei Einrichtungen zum Pumpen von Wasser unter Druck zu den genannten Sprühdüsen zwecks Umwälzen des über die Doppelwirbelkammer-Düsen besprühten ölverschmutzten Bereiches vorgesehen sind.

7. Einrichtung nach Anspruch 6, dadurch gekennzeichnet, daß die Düse bzw. Düsen derart ausgerichtet ist bzw. sind, daß der Sprühstrahlwinkel 45° unterhalb der Horizontalen beträgt.

8. Einrichtung nach den Ansprüchen 6 oder 7, dadurch gekennzeichnet, daß das Fahrzeug ein Wasserfahrzeug ist.

### Revendications

1. Procédé de lutte contre la pollution pétrolière des eaux, selon lequel on pulvérise sur la région polluée une composition dispersante au moyen d'au moins une tuyère, que l'on déplace en translation au-dessus de la masse d'eau sur laquelle se trouve le polluant pétrolier, et on agite la région ainsi arrosée, caractérisé en ce que l'on pulvérise la composition dispersante par au moins une tuyère à double chambre de turbulence, possédant une chambre de turbulence primaire, dans laquelle la composition est introduite tangentiellement et d'où la composition sort par un orifice primaire comme un jet pulvérisé primaire pour entrer dans une chambre de turbulence secondaire, que la composition quitte sous forme d'un jet pulvérisé secondaire dont les gouttelettes sont comprises dans une plage de grosseurs plus étroite que les gouttelettes du jet primaire, les chambres et les orifices étant coaxiaux et la tuyère ou les tuyères étant dirigée(s) vers l'arrière par rapport à la direction de translation, et en ce que l'on agite ensuite la région arrosée en pulvérisant sur elle de l'eau tirée de la masse d'eau.

2. Procédé selon la revendication 1, où la tuyère ou les tuyères est ou sont orientée(s) pour pulvériser sous un angle compris entre l'horizontale et 45° sous l'horizontale.

3. Procédé selon la revendication 1 ou 2, où la grosseur des gouttelettes de la composition dispersante pulvérisée est comprise entre 1 mm et 1,5 mm.

4. Procédé selon l'une quelconque des revendications 1 à 3, où la tuyère ou chaque tuyère est agencée pour produire un jet pulvérisé ayant un angle de cône de 140°.

5. Procédé selon l'une quelconque des revendications 1 à 4, où la composition dispersante est formée d'un dispersant et d'eau tirée de la masse d'eau sur la surface de laquelle se trouve le polluant pétrolier.

6. Appareil pour la lutte contre la pollution pétrolière des eaux, comprenant un véhicule capable de se déplacer à la surface ou près de la surface de la masse d'eau sur laquelle se trouve le polluant pétrolier, une barre formant rampe sur laquelle est montée au moins une tuyère, par laquelle une composition dispersante peut être pulvérisée sur la région polluée pendant que le véhicule est déplacé en translation sur ou près de la surface de celle-ci, ainsi qu'un dispositif pour agiter la région ainsi arrosée, caractérisé en ce que la tuyère ou chaque tuyère est une tuyère à double chambre de turbulence, possédant une chambre de turbulence primaire, une entrée tangentielle pour cette chambre primaire, un orifice primaire faisant communiquer la chambre primaire avec une chambre de turbulence secondaire et un orifice de sortie pour la chambre secondaire, les chambres et les orifices étant coaxiaux et la tuyère ou chaque tuyère étant dirigée vers l'arrière par rapport à la direction de translation prévue, un dispositif de pompage étant prévu pour délivrer une composition dispersante sous pression à la tuyère ou à chaque tuyère, et en ce que le dispositif d'agitation comporte une barre formant une rampe supplémentaire, qui est installée entre la barre formant rampe mentionnée en premier et l'arrière du véhicule et sur laquelle sont montées plusieurs tuyères de pulvérisation classiques, un dispositif étant prévu pour pomper de l'eau sous pression vers ces tuyères de pulvérisation classiques, en vue de l'agitation de la région polluée et arrosée par la tuyère ou les tuyères à double chambre de turbulence.

7. Appareil selon la revendication 6, dans lequel la tuyère ou les tuyères est ou sont orientée(s) pour pulvériser sous un angle compris entre l'horizontale et 45° sous l'horizontale.

8. Appareil selon la revendication 6 ou 7, dont le véhicule est un bateau.

FIG. 1.

FIG. 2.

FIG. 3.

FIG. 4.

FIG. 5.